# EUROPÄISCHE PATENTSCHRIFT

(11) **EP 1 759 140 B1**
(45) Veröffentlichungstag und Bekanntmachung des Hinweises auf die Patenterteilung: **24.12.2008**
(21) Anmeldenummer: 05757009.5
(22) Anmeldetag: 23.06.2005
(51) Int. Cl.: F16L 11/12, F16L 11/08

(54) **BRAUSESCHLAUCH AUS FLEXIBLEM KUNSTSTOFF MIT ANTIBAKTERIELLER AUSRÜSTUNG**
SHOWER HOSE PRODUCED FROM FLEXIBLE PLASTIC HAVING AN ANTIBACTERIAL FINISH
TUYAU FLEXIBLE DE DOUSCHE REALISE EN PLASTIQUE FLEXIBLE PRESENTANT UN POUVOIR ANTIBACTERIEN

(30) Priorität: 23.06.2004 DE 102004031923
(43) Veröffentlichungstag der Anmeldung: 07.03.2007
(73) Patentinhaber: Hansgrohe AG, 77761 Schiltach (DE)
(72) Erfinder: FATH, Andreas, 77761 Haslach (DE); AKALTAN, Zafer, 77761 Schiltach (DE); HEINZELMANN, Werner, 72275 Alpirsbach (DE); HEISTERHAGEN, Jan, 77746 Schutterwald (DE); SURM, Martin, 78713 Schramberg (DE)
(74) Vertreter: Patentanwälte Ruff, Wilhelm, Beier, Dauster & Partner
(86) Internationale Anmeldenummer: PCT/EP2005/006803
(87) Internationale Veröffentlichungsnummer: WO 2006/000413

(56) Entgegenhaltungen:
- WO-A-96/22114
- WO-A-99/60297
- US-A- 4 620 569
- US-A- 5 322 659
- US-A- 5 765 599
- US-B1- 6 261 271
- US-B1- 6 368 611

## Beschreibung

Die Erfindung betrifft einen Brauseschlauch aus flexiblem Kunststoff, mit einer inneren Oberfläche und einer äußeren Oberfläche und mit einer antibakteriellen Ausrüstung.

Mikrobielle Verunreinigungen im Trink- und Brauchwasser stellen nicht nur in den Entwicklungsländern ein ernsthaftes Gesundheitsrisiko dar. Auch in den Industrieländern treten immer häufiger lebensgefährliche mikrobielle Verunreinigungen in Trink- oder Brauswasserbehältern bzw. -leitungen oder Warmwasserbereitern auf. Insbesondere in Leitungen, Behältern oder Entnahmevorrichtungen, in welchen das ursprünglich keimarme Wasser für eine gewisse Zeit steht, erwärmt oder transportiert wird, sind von derartigen Verkeimungen betroffen.

Diese mikrobiellen Verunreinigungen entstehen durch das Verweilen des Wassers in Behältern oder Leitungsabschnitten bei Umgebungstemperaturen, welche für die Vermehrung der Mikroorganismen extrem günstig ist. Besonders stark gefährdet sind Warmwasserbereiter oder Warmwasserleitungen, durch welche zunächst heißes Wasser fließt, jedoch nach der Wasserentnahme das verbleibende Restwasser langsam abkühlt und dabei den für die Vermehrung des Mikroorganismus optimalen Temperaturbereich über einen relativ langen Zeitraum durchläuft. Dadurch kommt es zu einer starken Vermehrung dieser pathogenen Mikroorganismen und es werden sehr schnell die für Trinkwasser festgelegten Grenzwerte an im Wasser enthaltenen Erregern überschritten und für den Menschen toxische Konzentrationen erreicht. Als einer der gefährlichsten Erreger sind die Legionellen (Legionella Pneumophila) anzusehen, welche einen optimalen Temperaturbereich zur Vermehrung von 30 °C bis 50 °C aufweisen.

Es ist derzeit bekannt das Wasser in Wassertanks und Kanistern, in welchen das Wasser über einen längeren Zeitraum aufbewahrt wird, durch Zugabe von Chemikalien in Form von silber- oder chlorhaltigen Zusätzen wirkungsvoll vor einer Verkeimung zu schützen. Diese Methode ist jedoch nur bei Wasserbehältern nicht jedoch bei Wasserleitungen bzw. -schläuchen praktikabel, da eine wiederholt von Wasser durchströmte Leitung eine ständige Zugabe eines derartigen antimikrobiellen Zusatzes erfordern würde.

Besonders gefährdet sind neben Warmwasserbehältern, welche über einen längeren Zeitraum eine Wassertemperatur von 30 °C bis 50 °C halten, auch Klimaanlagen, Luftbefeuchter, Duschbrausen sowie Brauseschläuche, in welchen das Wasser bei Umgebungstemperaturen, insbesondere im Sommer sowie in Badezimmern, von 25 °C bis 30 °C ausgesetzt ist. In diesen Geräten und Vorrichtungen kann es daher schon bei einer relativ kurzen Standzeit, d.h. beispielsweise bei einer unregelmäßigen Entnahme des Wassers, zu einer starken Vermehrung der Krankheitserreger kommen, welche anschließend bei Inbetriebnahme der Vorrichtungen und Geräte als Aerosole in die Atemluft und damit auf direktem Wege in die Lunge gelangen. Auf diesem Infektionsweg kommt es insbesondere im Fall von Legionellen unter Umständen zu außerordentlich schwerwiegenden bis tödlichen Infektionen.

Aus der DE 42 26 810 C1 sind Kunststoffteile bekannt, die nicht von Keimen besiedelbar sind und hauptsächlich im medizinischen Bereich eingesetzt werden. Die bakterizide Wirkung wird durch Silberverbindungen auf und/oder in der Oberfläche des Kunststoffes selbst erreicht. Dafür wird der Kunststoff mit einem Quellungsmittel behandelt und der gequollene Kunststoff mit einer Lösung einer Silberverbindung (z.B. AgNO₃ behandelt. Ein Problem besteht darin, dass die Silberverbindung aufgrund ihrer Wasserlöslichkeit schnell aus dem zu schützenden Material herausgewaschen werden kann. Dies ist insbesondere im Fall von stark durchströmten Leitungen ein gravierender Nachteil. Außerdem kann es bei langfristigem Einsatz derartig beschichteter Schläuche oder Duschbrausen durch ausgewaschenes Silbernitrat beim Kontakt mit der Haut zu unerwünschten lokalen Schwarzverfärbungen kommen.

Aus der DE 44 36 927 C2 ist eine Munddusche bekannt, bei welcher Teile eines Flüssigkeitsbehälters oder von Pumpenkammern mit einer Silberlegierung beschichtet werden, um eine Verkeimung des im Flüssigkeitsbehälter oder in der Pumpe verbliebenen Restwassers zu verhindern.

Aus der DE 101 34 468 A1 ist ein stabförmiger Einsatz aus Silber und Edelstahl bekannt, der in einen vorhandenen Duschschlauch eingeführt wird und durch Abgabe von Silberionen Mikroorganismen im Schlauch am Wachstum hindern soll. Nachteilig an diesen stabförmigen Einsatz ist neben der großen Menge an Silber vor allem die Beeinträchtigung der Flexibilität des Schlauches durch den Einsatz und insbesondere die Verminderung des Schlauchquerschnitts. Dadurch kommt es zu einer Reduzierung der Wasserdurchflussmenge. Außerdem besteht die Gefahr von Ablagerungen auf dem gewendelten stabförmigen Einsatz mit der Gefahr der Verstopfung des Schlauches.

Silber ist gegenüber Mikroorganismen als sehr toxisches Metall bekannt und besitzt ein extrem breites antimikrobielles Spektrum. Seine Wirksamkeit gegenüber pathogenen Mikroorganismen resultiert aus einem Eingriff der Silberionen in den Transmembran-Energie-Metabolismus und wirkt unter anderem sowohl gegen gram negative wie auch gram positive Bakterien sowie diverse weitere für den Menschen toxische Mikroorganismen, insbesondere gegen Legionellen.

Es ist weiterhin bekannt, Produkte aus verschiedenen Materialien mittels eines plasmagestützten Beschichtungsverfahrens in einer Vakuumapparatur mit einer feinen Schicht metallischen Silbers zu bedampfen. Diese Beschichtung bedarf jedoch eines sehr hohen apparativen Aufwandes und ist daher sehr kostspielig und kommt hauptsächlich bei medizintechnischen Produkten zur Anwendung.

Der Erfindung liegt die Aufgabe zugrunde, einen Brauseschlauch bereitzustellen, bei welchem das nach der Wasserentnahme verbleibende Restwasser auch nach mehrtägigen Unterbrechungen zwischen den einzelnen Wasserentnahmen nicht durch pathogene Mikroorganismen kontaminiert wird.

Diese Aufgabe wird gelöst durch einen Brauseschlauch aus flexiblem Kunststoff, mit einer inneren Oberfläche und einer äußeren Oberfläche und einer antimikrobiellen Ausrüstung, wobei in das Material mindestens der inneren Oberfläche mindestens ein antimikrobieller Wirkstoff eingelagert ist gemäß Anspruch 1.

Der antimikrobielle Wirkstoff ist auf verschiedene Weise in das Oberflächenmaterial des Schlauches eingebracht, wobei verschiedene Techniken miteinander kombiniert werden können. So ist bei einer Ausführungsform der Erfindung der antimikrobielle Wirkstoff in die Kunststoffoberfläche eingeschossen. Hierzu eignet sich, für die äußere Oberfläche, das sogenannte Kaltgasspritzen. Hierbei werden Partikel des antimikrobiellen Wirkstoffs, in Form von Metallpartikeln, mit Stickstoff unter hohem Druck von beispielsweise 35 bar in die Kunststoffoberfläche eingeschossen. Die dabei erzielte Eindringtiefe der Partikel reicht aus, um eine Langzeitwirkung des bakteriellen Wirkstoffs über Jahre hinweg zu erzielen.

Bei der Erfindung ist der antimikrobielle Wirkstoff ein Metall und/oder ein Metallsalz. Als Metall kommen Schwermetalle in Frage wie Kupfer und insbesondere Silber. Die Oxidationsprodukte von Kupfer und Silber haben die eigentliche antimikrobielle Wirkung. Die Oxidationsprodukte werden aus der metallischen Form gebildet. Es ist bei der Erfindung vorgesehen unmittelbar Salze oder sonstige Verbindungen oder Komplexe der Schwermetalle in einer Silikatmatrix einzusetzen, gegebenenfalls in Verbindung mit der metallischen Form in Form von Partikeln. Als antimikrobielle Wirkstoffe können auch unspezifische organische antimikrobielle Wirkstoffe verwendet werden. Solche Wirkstoffe sind bekannt. Gute antimikrobielle Eigenschaften haben beispielsweise Triclosan und PHMB. Es können auch Mischungen verschiedener antimikrobieller Wirkstoffe verwendet werden oder unterschiedliche Wirkstoffe auf der inneren Oberfläche und der äußeren Oberfläche des Schlauches.

Gemäß der Erfindung wird der mindestens eine antimikrobielle Wirkstoff in das Schlauchmaterial eingelagert. Eine solche Einlagerung behindert den Durchfluss des Wassers durch den Sanitärschlauch nicht und lässt sich bei der Herstellung des Schlauches auch kostengünstig bewerkstelligen. Der antimikrobielle Wirkstoff kann dann aus dem Material der Schlauchoberfläche austreten bzw. ausdiffundieren und damit seine Wirksamkeit entfalten.

Bei einer bevorzugten Ausführungsform der Erfindung ist der antimikrobielle Wirkstoff nicht nur in das Material, das die Schlauchinnenseite bildet, eingelagert sondern auch in das Material, das die Schlauchaußenseite, d.h. die äußere Oberfläche bildet. Auf diese Weise können auch Verkeimungen der Schlauchaußenseite verhindert werden, die sonst leicht auftreten können, wenn Schmutz oder Seifenreste an der Schlauchaußenseite haften bleiben. Der Schlauch kann vom Aufbau her ein herkömmlicher Brauseschlauch sein. Vorzugsweise ist der Schlauch ein mindestens doppelwandiger Schlauch, in der Regel ein doppelwandiger Schlauch.

Der Kunststoff des Schlauchmaterials kann vollständig mit antimikrobiellem Wirkstoff versehen sein, d.h. der Wirkstoff kann durchgehend in das Material eingearbeitet sein. Dies ist aber nicht notwendig und in vielen Fällen auch nicht erwünscht. Bei einer bevorzugten Ausführungsform ist der mindestens eine antimikrobielle Wirkstoff in das Material des Schlauches nur im Bereich der mindestens einen Oberfläche eingelagert. Dadurch ist sichergestellt, dass das Schlauchmaterial im übrigen seine erwünschten Materialeigenschaften unverändert behält. Außerdem reicht ein Bruchteil der Menge an Wirkstoff aus, ohne die Wirkung nachteilig zu beeinträchtigen.

Bei einer Ausführungsform der Erfindung wird die innere und/oder äußere Oberfläche von einer Oberflächenschicht gebildet, die den antimikrobiellen Wirkstoff enthält. Eine solche Oberflächenschicht besteht vorzugsweise aus dem gleichen Kunststoff wie eine darunter liegende Schicht des Schlauches. Der flexible Kunststoff des Schlauches ist mit Vorteil ein flexibler Thermoplast und/oder ein thermoplastisches Elastomer. Solche Kunststoffe sind bekannt. Hierzu gehören zum Beispiel Weich-PVC (Weichpolyvinylchlorid), Weichpolyethylen, flexibles Polyurethan und Silikon.

Die Oberflächenschicht kann eine gesonderte Schicht sein. Mit Vorteil unterscheidet sie sich vom darunter liegenden Schlauchmaterial nur dadurch, dass sie zusätzlich den antimikrobiellen Wirkstoff enthält. Bei einer Ausführungsform der Erfindung ist die mindestens eine Oberflächenschicht von einem thermoplastischem Kunststoff gebildet, der vorzugsweise auf eine darunter liegende Schicht des Schlauches aufextrudiert ist. Bevorzugt ist die Oberflächenschicht mit der darunter liegenden Schicht verbunden. Hierbei ist es besonders bevorzugt, wenn die Oberflächenschicht mit der darunter liegenden Schicht durch Coextrusion verbunden ist. Durch gemeinsames Extrudieren aus der Schmelze findet eine innige Verbindung der Materialien statt, ohne dass eine trennende Grenze erkennbar ist.

Der antimikrobielle Wirkstoff kann in einer von der Oberfläche nach innen abnehmenden Konzentration im Material der Oberfläche vorliegen. Dies kann beispielsweise dann der Fall sein, wenn Partikel des antimikrobiellen Wirkstoffs in die Oberfläche eingeschossen werden. Der antimikrobielle Wirkstoff kann andererseits auch gleichmäßig in der Oberflächenschicht verteilt sein. Dies ist bevorzugt dann der Fall, wenn die Oberflächenschicht durch Aufextrudieren gebildet wird. Hierzu kann die Oberflächenschicht von einem Material gebildet sein, in dessen Schmelze der antimikrobielle Wirkstoff eingemischt wurde.

Die Schichtdicke der Oberflächenschicht ist klein im Verhältnis zur Schichtdicke des übrigen Schlauchmaterials. Sie liegt in der Regel unter 20%, insbesondere unter 10% der Dicke des Schlauchmaterials. Die Schichtdicke der Oberflächenschicht beträgt vorzugsweise 0,05 bis 1 mm, insbesondere 0,2 bis 0,5 mm.

Wie bereits erwähnt liegt der mindestens eine antibakterielle Wirkstoff vorzugsweise in Partikelform vor. Die Partikelgröße liegt vorzugsweise im Bereich von 5 µm bis 200 µm, insbesondere 20 µm bis 100 µm. Die Partikelgröße kann bevorzugt der Auflösungsgeschwindigkeit und Diffusionsgeschwindigkeit des antimikrobiellen Wirkstoffs angepasst werden.

Als antimikrobielle Wirkstoffe kommen bevorzugt unspezifisch wirkende Stoffe in Frage. Solche Wirkstoffe haben ein sehr breites Wirkungsspektrum ohne Gefahr einer Resistenzbildung. Es ist auch möglich, Wirkstoffe einzusetzen, deren Folgeprodukte die eigentliche Wirkung aufweisen. Die Wirkstoffe diffundieren langsam aus dem Kunststoff der Oberfläche aus bzw. werden aus diesem langsam ausgewaschen, wobei sie ihre Wirkung entfalten, was besonders dann erwünscht ist, wenn das Wasser längere Zeit im Schlauch steht.

Die Konzentration des Wirkstoffes in der Oberfläche, insbesondere in der Oberflächenschicht des Schlauches kann der Aktivität und Verweildauer des Wirkstoffs angepasst werden. In der Regel liegt der Wirkstoff im Material der Oberfläche in einer Konzentration von 0,01 bis 10 Gew.%, insbesondere 0,1 bis 2 Gew.% vor.

Der Sanitärschlauch besitzt in der Regel an seinen Enden Anschlüsse für die Montage. So ist ein Brauseschlauch in der Regel an seinen Enden mit Schlauchnippeln versehen, mit deren Hilfe er einerseits an einer Handbrause und andererseits an einer Wasserzuleitung anschließbar ist. Der erfindungsgemäße Schlauch ist vorzugsweise undurchsichtig bzw. Licht undurchlässig. Dadurch kann eine unerwünschte Algenbildung im Schlauch vermieden werden, so dass die Wirkung des antimikrobiellen Wirkstoffs voll für die Abtötung etwaiger gesundheitsschädlicher Keime zur Verfügung steht.

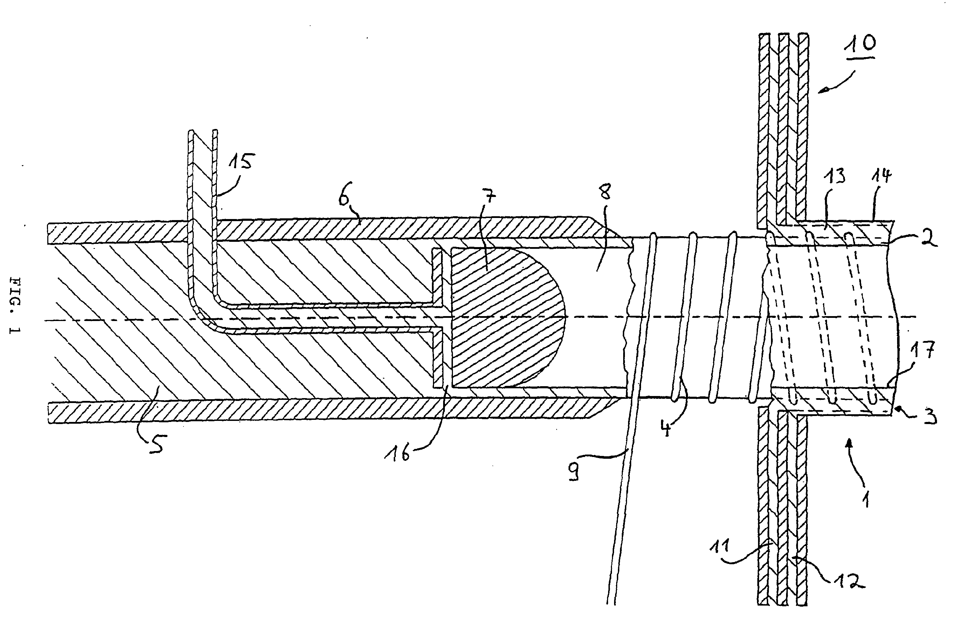

Weitere Vorteile und Merkmale der Erfindung ergeben sich aus der nachfolgenden Beschreibung von bevorzugten Ausführungsformen in Verbindung mit den Unteransprüchen und der Zeichnung. Hierbei können die einzelnen Merkmale jeweils für sich alleine oder zu mehreren in Kombination miteinander bei einer Ausführungsform verwirklicht sein.

Bei der in der Zeichnung dargestellten Ausführungsform der Erfindung ist ein Beispiel für die Herstellung eines erfindungsgemäßen Schlauches in schematischer Weise dargestellt. Es handelt sich um eine Endlosfertigung eines Brauseschlauches. Aus dem Endlosschlauch werden dann Brauseschläuche gewünschter Länge abgelängt, und die Schlauchenden werden in üblicher Weise mit Anschlussnippeln versehen, wonach die Schläuche gebrauchsfertig sind. Beim erfindungsgemäßen Schlauch handelt es sich um einen doppelwandigen Brauseschlauch 1 mit einem Innenschlauch 2 aus dunkel eingefärbtem Weich-PVC, einem Außenschlauch 3 aus durchsichtigem Weich-PVC und einer dazwischen liegenden Verstärkungswendel 4 aus Hart-PVC, die an ihrer Außenseite mit Aluminium bedampft oder mit einer Aluminiumfolie versehen sein kann, um einen metallischen Effekt zu erzielen.

Der Brauseschlauch wird im Prinzip nach herkömmlichen Techniken durch einen Extruder hergestellt, wobei im vorliegenden Fall eine besondere Ausrüstung vorgenommen wurde. Eine Extruderschnecke oder ein Schneckenpaar (nicht dargestellt) treibt die geschmolzene Masse 5, aus der der Innenschlauch 2 gebildet werden soll durch eine Ringdüse 6, innerhalb derer sich ein Dorn 7 befindet, durch den der Schlauchhohlraum 8 gebildet wird. In dem Hohlraum 8 wird ein erhöhter Innendruck aufrechterhalten, um ein Zusammenfallen des Schlauches zu vermeiden. Auf den noch warmen Innenschlauch 2 wird ein Verstärkungsband 9 unter Ausbildung der Verstärkungswendel 4 aufgewickelt, wonach durch eine zweite ringförmige Extrusionsdüse 10, die als Coextrusionsdüse ausgebildet ist, der Außenschlauch 3 über die Verstärkungswendel 4 geformt wird, an der er leicht haftet.

Die Coextrusionsdüse 10 wird von gesonderten Extrudern mit zwei verschiedenen Schmelzen aus Weich-PVC beschickt und zwar mit einer normalen PVC-Schmelze im Ringkanal 11 und einer mit einem antimikrobiellen Mittel dotierten Schmelze im Ringkanal 12. Dementsprechend ist der Außenschlauch 3 des erfindungsgemäßen Brauseschlauches bei der vorliegenden Ausführungsform zweischichtig ausgebildet. Die durch den Ringkanal 11 eintretende Schmelze bildet die untere Schicht 13 des Außenschlauches 3, die auf der Verstärkungswendel 4 zur Anlage kommt. Die die äußere Oberfläche des Schlauches bildende Oberschicht 14 ist im Vergleich zur Unterschicht 13 wesentlich dünner aber in Folge der Coextrusion unter Verwendung des gleichen Grundmaterials fest mit der Unterschicht verbunden.

Die Schmelze der Oberschicht bzw. Oberflächenschicht 14 wird aus einem PVC-Granulat gebildet, in das Silberpartikel in einer Menge von 1 Gew.% eingelagert sind. Die Silberpartikel haben eine mittlere Größe im Bereich von 50 bis 100 µm. Die aus dieser Schmelze gebildete Oberschicht bzw. Oberflächenschicht hat eine Schichtdicke im Bereich von 0,3 mm.

Für die Ausbildung des Innenschlauches 2 kann ein Granulat verwendet werden, das bereits das antimikrobielle Mittel enthält. In einem solchen Falle eignen sich antimikrobielle Mittel in Form von unspezifisch wirkenden organischen Verbindungen wie Triclosan^{R} (2,4,4'Tricloro-2'-hydroxydiphenyl)ether oder PHMB (Polyhexamethylenbiguanid)hydrochlorid).

Bei der dargestellten Ausführungsform findet im Unterschied dazu eine Einlagerung des antimikrobiellen Mittels in die innere Oberfläche des Innenschlauches statt, solange dieser zwar vorgeformt ist aber noch in Form der Schmelze 5 vorliegt. Eine von außerhalb des Extruders kommende Dosierleitung 15 führt in den Dorn 7 und durch eine Vielzahl von radialen Einzeldüsen 16 an die Außenfläche des Doms 7. Durch Druckbeaufschlagung kann antimikrobielles Mittel in Pulverform oder in Pastenform durch die radialen Düsen 16 austreten und wird dort von der vorbeifließenden Schmelze abgestreift und in diese unter Bildung der inneren Oberfläche 17 aufgenommen, insbesondere eingeschmolzen. Das antimikrobielle Mittel kann auch bereits in Form einer Schmelze vorliegen, indem es zuvor beispielsweise mit PVC-Pulver vermischt und in diesem aufgeschmolzen wird. Als antimikrobielles Mittel eignet sich hier wiederum Silber in Partikelform. Das Silber kann sowohl in metallischer Form als auch in Form eines Salzes oder Komplexes mit ausreichender Löslichkeit vorliegen, um, falls erwünscht, gleich von Anfang an eine gute bakterizide Wirkung zu erzielen. Die radialen Düsen 16 können, falls gewünscht, auch zu einer radialen Ringdüse zusammengefasst sein. Dies ist dann von Vorteil, wenn die gesamte innere Oberfläche des Innenschlauches mit antimikrobiellem Mittel versehen sein soll.

## Patentansprüche

1. Brauseschlauch aus flexiblem Kunststoff mit einer inneren Oberfläche (17) und einer äußeren Oberfläche (14), mit mindestens zwei Wandungen, mit Anschlußnippeln sowie einer antimikrobiellen Ausrüstung, **dadurch gekennzeichnet, dass** als antimikrobielle Ausrüstung mindestens ein antimikrobieller Wirkstoff in Partikelform vorgesehen ist, wobei der mindestens eine antimikrobielle Wirkstoff von einem Schwermetall gebildet wird, das in eine Silikatmatrix eingebunden ist, und wobei das Schwermetall in der Matrix als Salz, Komplex und/oder sonstige Verbindung vorliegt, und dass die Partikel des mindestens einen anti-mikrobiellen Wirkstoffs in das Schlauchmaterial mindestens der inneren Oberfläche (17) des Brauseschlauches eingelagert sind.

2. Brauseschlauch nach Anspruch 1, **dadurch gekennzeichnet, dass** der antimikrobielle Wirkstoff auch in das Material der äußeren Oberfläche (14) eingelagert ist.

3. Brauseschlauch nach Anspruch 1 oder 2, **dadurch gekennzeichnet, dass** der Schlauch ein doppelwandiger Schlauch (1) ist.

4. Brauseschlauch nach einem der vorhergehenden Ansprüche, **dadurch gekennzeichnet, dass** der antimikrobielle Wirkstoff in die Oberfläche eingeschlossen ist.

5. Brauseschlauch nach einem der vorhergehenden Ansprüche, **dadurch gekennzeichnet, dass** die innere und äußere Oberfläche von einer Oberflächenschicht (14) gebildet wird, die den antimikrobiellen Wirkstoff enthält.

6. Brauseschlauch nach Anspruch 5, **dadurch gekennzeichnet, dass** die Oberflächenschicht (14) aus dem gleichen Kunststoff besteht wie eine darunter liegende Schicht (13) des Schlauches.

7. Brauseschlauch nach einem der vorhergehenden Ansprüche, **dadurch gekennzeichnet, dass** der flexible Kunststoff ein flexibler Thermoplast und/oder ein thermoplastisches Elastomer ist.

8. Brauseschlauch nach einem der Ansprüche 5 bis 7, **dadurch gekennzeichnet, dass** die Oberflächenschicht (14) aus einem thermoplastischen Kunststoff besteht und insbesondere auf eine darunter liegende Schicht (13) aufextrudiert ist.

9. Brauseschlauch nach einem der Ansprüche 5 bis 8, **dadurch gekennzeichnet, dass** die Oberflächenschicht (14) mit einer darunter liegenden Schicht (13) verbunden ist.

10. Brauseschlauch nach einem der Ansprüche 5 bis 9, **dadurch gekennzeichnet, dass** die Oberflächenschicht (14) mit einer darunter liegenden Schicht (13) durch Coextrusion verbunden ist.

11. Brauseschlauch nach einem der Ansprüche 5 bis 10, **dadurch gekennzeichnet, dass** der antimikrobielle Wirkstoff in die Oberflächenschicht (14, 17) bildenden Anteile des Kunststoffs eingeschmolzen ist.

12. Brauseschlauch nach einem der vorhergehenden Ansprüche, **dadurch gekennzeichnet, dass** der Kunststoff des Schlauchmaterials vollständig mit antimikrobiellem Wirkstoff versehen ist, insbesondere der antimikrobielle Wirkstoff durchgehend im Kunststoffmaterial eingearbeitet ist.

13. Brauseschlauch nach einem der Ansprüche 5 bis 12, **dadurch gekennzeichnet, dass** die Oberflächenschicht (14) eine Schichtdicke von 0,05 bis 1 mm aufweist.

14. Brauseschlauch nach einem der vorhergehenden Ansprüche, **dadurch gekennzeichnet, dass** der Wirkstoff eine Partikelgröße im Bereich von 5 µm bis 200 µm besitzt.

15. Brauseschlauch nach einem der vorhergehenden Ansprüche, **dadurch gekennzeichnet, dass** das Schwermetall Silber ist.

16. Brauseschlauch nach einem der vorhergehenden Ansprüche, **dadurch gekennzeichnet, dass** der Wirkstoff in der Oberfläche (14), insbesondere in der Oberflächenschicht, in einer Konzentration von 0,01 bis 10 Gew.%, insbesondere 0,1 bis 2 Gew.% vorliegt.

## Claims

1. A shower hose fabricated from a flexible plastic having an inner surface (17) and an outer surface (14), at least two walls, connecting fittings, and anti-microbial equipment, wherein at least one anti-microbial, active agent in particulate form is provided as the anti-microbial equipment, where the at least one anti-microbial, active agent is formed from a heavy metal bound in a silicate matrix, the heavy metal in the matrix being present therein in the form of a salt, complex, and/or other compound, and the particles of the at least one anti-microbial, active agent are embedded in the material of at least the inner surface (17) of the shower hose.

2. The shower hose according to claim 1, wherein the anti-microbial, active agent is also embedded in the material of the outer surface (14).

3. The shower hose according to claim 1 or claim 2, wherein the hose is a double-walled hose(1).

4. The shower hose according to any of the foregoing claims, wherein the anti-microbial, active agent is included in the surface.

5. The shower hose according to any of the foregoing claims, wherein the inner and outer surfaces are formed by a surface (14) containing the anti-microbial, active agent.

6. The shower hose according to claim 5, wherein the surface layer (14) consists of the same plastic as an underlying layer (13) of the hose.

7. The shower hose according to any of the foregoing claims, wherein the flexible plastic is a flexible thermoplastic and/or thermoplastic elastomer.

8. The shower hose according to any of claims 5 - 7, wherein the surface layer (14) consists of a thermoplastic and, in particular, is extruded onto an underlying layer (13).

9. The shower hose according to any of claims 5 - 8, wherein the surface layer (14) is joined to an underlying layer (13).

10. The shower hose according to any of the claims 5 - 9, wherein the surface layer (14) is joined to an underlying layer (13) by coextrusion.

11. The shower hose according to any of claims 5 - 10, wherein the anti-microbial, active agent is fused into those portions of the plastic forming the outer layer (14, 17).

12. The shower hose according to any of the foregoing claims, wherein all of the plastic of the hose material is provided with anti-microbial, active agent, in particular, the anti-microbial, active agent involved is incorporated into the plastic material involved over its full length.

13. The shower hose according to any of claims 5 - 12, wherein the thickness of the surface layer (14) is 0.05 mm to 1 mm.

14. The shower hose according to any of the foregoing claims, wherein the active agent has a particle size ranging from 5 µm to 200 µm.

15. The shower hose according to any of the foregoing claims, wherein the heavy metal is silver.

16. The shower hose according to any of the foregoing claims, wherein the active agent in the surface (14), in particular, in the outer layer, is present in a concentration of 0.01 % to 10 % by weight, in particular, a concentration of 0.1 % to 2 % by weight.

## Revendications

1. Tuyau flexible de douchette en matière plastique flexible, avec une surface intérieure (17) et une surface extérieure (14), avec au moins deux parois, avec des embouts de raccordement ainsi qu'un apprêt antimicrobien, **caractérisé en ce qu'**est prévu comme apprêt antimicrobien au moins un principe actif antimicrobien sous forme particulaire, au moins un principe actif antimicrobien étant formé par un métal lourd intégré dans une matrice de silicate, et ledit métal lourd lié dans la matrice se présente sous forme de sel, de complexe et/ou de composé divers, et **en ce que** les particules au moins de ce principe actif antimicrobien sont stockées dans le matériau constituant le tuyau flexible, matériau au moins de la surface intérieure (17) du tuyau flexible de douchette.

2. Tuyau flexible de douchette selon la revendication 1, **caractérisé en ce que** le principe actif antimicrobien est également stocké dans le matériau de la surface extérieure (14).

3. Tuyau flexible de douchette selon la revendication 1 ou 2, **caractérisé en ce que** le tuyau flexible est un tuyau flexible (1) à double paroi.

4. Tuyau flexible de douchette selon l'une des revendications précédentes, **caractérisé en ce que** le principe actif antimicrobien est inclus dans la surface.

5. Tuyau flexible de douchette selon l'une des revendications précédentes, **caractérisé en ce que** la surface intérieure et extérieure est formée par une couche superficielle (14) contenant le principe actif antimicrobien.

6. Tuyau flexible de douchette selon la revendication 5, **caractérisé en ce que** la couche superficielle (14) est constituée de la même matière plastique qu'une couche (13) du tuyau flexible située en dessous.

7. Tuyau flexible selon l'une des revendications précédentes, **caractérisé en ce que** la matière plastique flexible est une matière thermoplastique flexible et/ou un élastomère thermoplastique.

8. Tuyau flexible de douchette selon l'une des revendications 5 à 7, **caractérisé en ce que** la couche superficielle (14) se compose d'une matière thermoplastique et notamment qu'elle a été extrudée sur une couche (13) située en dessous.

9. Tuyau flexible de douchette selon l'une des revendications 5 à 8, **caractérisé en ce que** la couche superficielle (14) est reliée à une couche (13) située en dessous.

10. Tuyau flexible de douchette selon l'une des revendications 5 à 9, **caractérisé en ce que** la couche superficielle (14) est reliée par coextrusion à une couche (13) située en dessous.

11. Tuyau flexible de douchette selon l'une des revendications 5 à 10, **caractérisé en ce que** le principe actif antimicrobien a été fondu dans des parts de la matière plastique formant la couche superficielle (14, 17).

12. Tuyau flexible de douchette selon l'une des revendications précédentes, **caractérisé en ce que** la matière plastique constituant le matériau du tuyau flexible a été entièrement dotée de principe actif antimicrobien, en particulier que le principe actif antimicrobien a été incorporé dans toute la masse de la matière plastique.

13. Tuyau flexible de douchette selon l'une des revendications 5 à 12, **caractérisé en ce que** la couche superficielle (14) présente une épaisseur comprise entre 0,05 et 1 mm.

14. Tuyau flexible de douchette selon l'une des revendications précédentes, **caractérisé en ce que** le principe actif présente une taille particulaire située dans une plage comprise entre 5 et 200 microns.

15. Tuyau flexible de douchette selon l'une des revendications précédentes, **caractérisé en ce que** le métal lourd est de l'argent.

16. Tuyau flexible de douchette selon l'une des revendications précédentes, **caractérisé en ce que** le principe actif présent dans la surface (14), notamment dans la couche superficielle, s'y trouve à une concentration comprise entre 0,01 et 10 % pondéraux, notamment entre 0,1 et 2 % pondéraux.
